Europäisches Patentamt

European Patent Office

Office européen des brevets

(19)

(11) Numéro de publication : **0 335 756 B1**

(12)                    **FASCICULE DE BREVET EUROPEEN**

(45) Date de publication du fascicule du brevet :
25.03.92 Bulletin 92/13

(51) Int. Cl.⁵ : **H02G 5/08**

(21) Numéro de dépôt : **89400364.9**

(22) Date de dépôt : **09.02.89**

(54) **Dispositif de raccordement de deux éléments de canalisation électrique mis bout à bout.**

(30) Priorité : **31.03.88 FR 8804265**

(43) Date de publication de la demande :
**04.10.89 Bulletin 89/40**

(45) Mention de la délivrance du brevet :
**25.03.92 Bulletin 92/13**

(84) Etats contractants désignés :
**BE CH DE ES GB IT LI NL SE**

(56) Documents cités :
**WO-A-86/01945**
**GB-A- 824 260**
**US-A- 2 906 811**
**US-A- 3 647 937**

(73) Titulaire : **TELEMECANIQUE**
**43-45 Boulevard Franklin Roosevelt**
**F-92500 Rueil-Malmaison (FR)**

(72) Inventeur : **Jego, Gérard**
**12, rue Louis-Pasteur**
**F-21470 BRAZEY EN PLAINE (FR)**
Inventeur : **Thierry, Jean-Pierre**
**36, rue des Espaces verts**
**F-21560 COUTERNON (FR)**
Inventeur : **Teinturier, Jean-Yves**
**6, allée des Meix**
**DOMOIS F-21600 LONGVIC (FR)**

(74) Mandataire : **Marquer, Francis et al**
**Cabinet Moutard 35, Avenue Victor Hugo**
**F-78960 Voisins le Bretonneux (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de raccordement de deux éléments de canalisation électrique préfabriquée mis bout à bout en alignement rectiligne, chaque élément de canalisation comprenant :

– un conduit tubulaire métallique de section approximativement parallélépipédique se composant d'un corps et d'un couvercle solidaire du corps, ledit couvercle présentant, à partir de l'extrémité de raccordement du conduit, une large découpe longitudinale d'extrémité,

– un support plat rectangulaire en matière plastique électriquement isolante qui s'étend longitudinalement à l'intérieur du conduit en apparaissant dans la découpe d'extrémité du couvercle du conduit et en étant appliqué par sa face inférieure contre le fond du corps du conduit, ledit support étant creusé à partir de sa face supérieure d'une pluralité de rainures parallèles, réparties régulièrement sur toute la largeur du support et développées longitudinalement sur toute la longueur de celui-ci, et dans chacune desquelles est logée à plat une barre conductrice de courant apparaissant à son extrémité à raccorder dans la découpe d'extrémité du couvercle du conduit,

– au moins une prise de dérivation disposée dans le couvercle du conduit et pourvue d'orifices situés en face des barres conductrices.

Pour chaque élément de canalisation du type considéré ci-dessus, les barres conductrices logées dans les rainures du support isolant sont généralement des profilés plats de forme rectangulaire, le plus souvent en cuivre. Par ailleurs, la canalisation électrique obtenue par assemblage de tels éléments de canalisation est actuellement utilisée pour la distribution de petites puissances, lesquelles sont habituellement définies pour des intensités nominales de canalisation comprises entre 40 et 125 ampères, les calibres de courant les plus couramment utilisés étant 40 A, 63 A et 100 A.

On connaît déjà un dispositif de raccordement de deux éléments de canalisation tels que décrits précédemment et mis bout à bout en alignement rectiligne, du type comportant :

– une éclisse de jonction mécanique entre les extrémités des conduits des deux éléments de canalisation, laquelle éclisse mécanique étant destinée à assurer, d'une part, la rigidité de l'assemblage entre les deux éléments et, d'autre part, la continuité électrique du conducteur de terre constitué par les conduits des deux éléments, et étant composée à cet effet de deux flasques métalliques qui recouvrent extérieurement, l'un, les deux corps des conduits, et l'autre, les deux couvercles des conduits en s'étendant tous deux au-delà des deux découpes d'extrémité des conduits, et qui sont rendus solidaires l'un de l'autre au moyen d'organes de serrage,

– une éclisse de jonction électrique entre les extrémités des barres conductrices des deux éléments de canalisation, laquelle éclisse électrique étant destinée à assurer la jonction automatique et simultanée de toutes les barres conductrices et comportant à cet égard un bloc d'éclissage formant connecteur qui est porté par la face interne du flasque recouvrant les deux couvercles des conduits et qui est muni de pinces de contact aptes à établir une liaison électrique entre chaque barre conductrice de l'un des éléments de canalisation et une barre conductrice correspondante de l'autre élément de canalisation.

Pour effectuer la liaison électrique entre deux barres conductrices rectangulaires disposées à plat, en regard l'une de l'autre, au moyen d'une pince de contact, il est connu de déformer au préalable par pliage chacune des deux barres rectangulaires en lui donnant un profil approximativement en S à son extrémité à raccorder, et d'appliquer par embrochage la pince de contact sur des portions terminales plates des extrémités pliées en S des deux barres correspondantes placées en regard.

Ainsi, chaque barre conductrice rectangulaire de chacun des deux éléments de canalisation repose à plat dans la rainure correspondante du support pour se terminer à son extrémité à raccorder par une partie surplombant ladite rainure du support. Or, le fait de disposer en surplomb les extrémités à raccorder des barres conductrices des deux éléments de canalisation contribue à diminuer en service, au niveau de l'éclissage desdits éléments, les échanges thermiques entre les barres et le conduit extérieur, ce qui ne permet pas d'assurer une bonne dissipation thermique des barres conductrices au niveau de l'éclissage.

La présente invention a pour but de remédier à cet inconvénient et de réaliser un dispositif de raccordement entre deux éléments de canalisation tels que définis plus haut, qui présente une structure générale correspondant à celle mentionnée ci-dessus, mais dans lequel la jonction électrique entre les barres conductrices disposées à plat est réalisée au moyen des pinces de contact et de simples organes intermédiaires de liaison associés aux barres, et ce, sans recourir à une quelconque déformation en extrémité des barres de manière à conserver en service une bonne dissipation thermique des barres au niveau de l'éclissage.

Selon l'invention, un dispositif de raccordement du type décrit précédemment, est plus particulièrement caractérisé en ce que, l'extrémité à raccorder de chacune des barres conductrices des deux éléments de canalisation reposant à plat dans la rainure correspondante du support, chaque pince de contact coopère à chacune de ses deux extrémités avec un étrier d'éclissage en matière électriquement conductrice monté fixement d'équerre sur ladite extrémité correspondante de la barre conductrice.

Selon une autre caractéristique de l'invention, les étriers d'éclissage associés respectivement aux extrémités à raccorder des barres conductrices de chacun des deux éléments de canalisation s'étendent dans le sens longitudinal des barres en faisant saillie perpendiculairement au plan du support des barres et présentent chacun, en section transversale, une forme approximative d'Ω dont les deux faces latérales de la partie centrale sont planes et reçoivent par embrochage l'extrémité correspondante de l'une des pinces de contact du bloc d'éclissage.

Selon un autre aspect de l'invention, le flasque métallique de l'éclisse de jonction mécanique servant à recouvrir les deux corps des conduits se compose d'une embase rectangulaire plane bordée de deux ailes latérales et reçoit par emboîtage une partie de chacun des deux corps des conduits, chaque corps de conduit venant s'appliquer, d'une part, par son fond contre l'embase du flasque et, d'autre part, par ses deux parois latérales contre les deux ailes du flasque, respectivement, lequel flasque présente par ailleurs des moyens de détrompage ne permettant l'emboîtage de chacun des deux corps des conduits que dans un seul sens.

Dans le cas notamment d'une ligne triphasée avec neutre, ce détrompage des deux éléments de canalisation pour leur mise en place appropriée dans le flasque est particulièrement avantageux car il permet de garantir une parfaite concordance entre les conducteurs de phase et de neutre des deux éléments de canalisation une fois emboîtés dans le flasque. En effet, en l'absence de détrompage, il est toujours possible d'emboîter les deux éléments de canalisation dans ledit flasque dans des sens inverses l'un de l'autre, ce qui a pour effet d'inverser l'ordre des conducteurs de phase et de neutre des deux éléments de canalisation.

Dans une forme de réalisation particulière, les susdits moyens de détrompage comportent une première paire de ressauts répartis respectivement sur la face interne des deux ailes latérales du flasque en étant situés tous deux d'un même premier côté du flasque par rapport à l'axe transversal du flasque passant par le milieu de celui-ci et en étant décalés tous deux sur des longueurs différentes par rapport audit axe transversal, et une seconde paire de ressauts situés d'un même second côté du flasque opposé au premier et positionnés symétriquement aux ressauts de la première paire par rapport audit axe transversal du flasque, les deux ressauts de chacune des première et seconde paires autorisant l'emboîtage d'un des deux conduits dans le flasque uniquement dans le cas où les deux ressauts s'engagent respectivement dans deux encoches correspondantes découpées respectivement dans les deux parois latérales du corps du conduit correspondant suivant le même décalage, par rapport à l'extrémité du conduit, que celui des deux ressauts.

D'autres caractéristiques et avantages de l'invention apparaîtront mieux dans la description détaillée qui suit et se réfère aux dessins annexés donnés uniquement à titre d'exemple et dans lesquels :

La figure 1 est une vue partielle en perspective éclatée du dispositif de raccordement selon l'invention, prêt au montage entre deux éléments de canalisation ;

La figure 2 est une vue de dessus du dispositif de raccordement à l'état monté entre les deux éléments de canalisation, une partie seulement du boîtier d'éclissage en position ouverte étant représentée et le flasque supérieur étant enlevé ;

La figure 3 est une vue de dessus du dispositif de raccordement à l'état monté entre les deux éléments de canalisation, le flasque supérieur étant mis en place ;

La figure 4 est une vue en coupe selon la ligne IV-IV de la figure 2, avec boîtier d'éclissage fermé et flasque supérieur mis en place ;

La figure 5 est une vue en coupe selon la ligne V-V de la figure 2, avec boîtier d'éclissage fermé et flasque supérieur mis en place ;

La figure 6 est une vue en coupe selon la ligne VI-VI de la figure 2, avec boîtier d'éclissage fermé et flasque supérieur mis en place ;

La figure 7 est une vue en coupe selon la ligne VII-VII de la figure 3 ; et

La figure 8 est une vue en coupe selon la ligne VIII-VIII de la figure 2, avec boîtier d'éclissage et flasque supérieur.

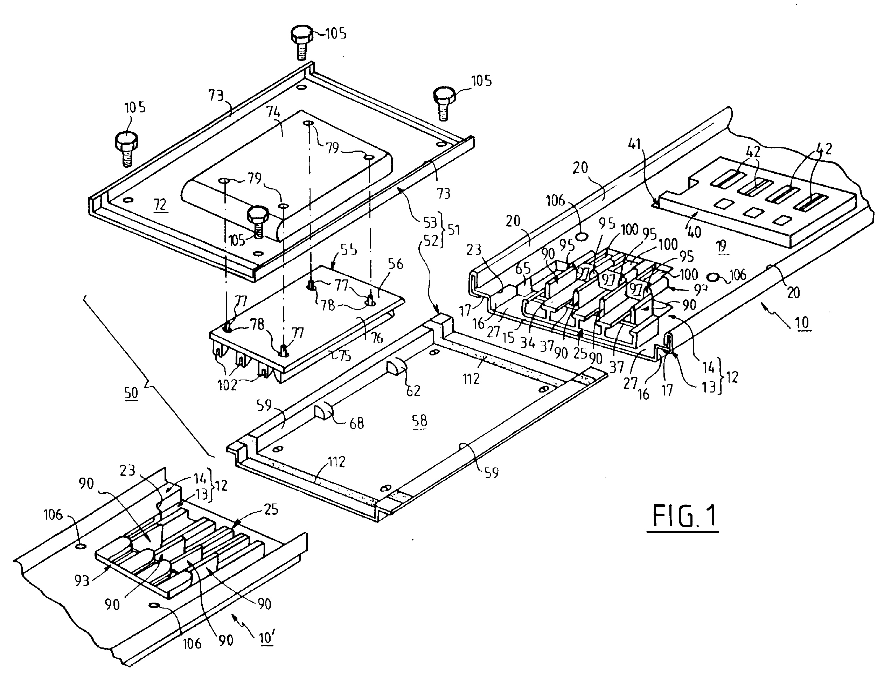

Sur la figure 1, on a représenté schématiquement en 10 et 10′ les extrémités opposées de deux éléments droits identiques de canalisation électrique qui sont destinés à être assemblés bout à bout au moyen d'un dispositif de raccordement conforme à l'invention, désigné par le repère général 50.

Etant donné que les deux éléments de canalisation 10, 10′ présentent la même structure générale, dans un souci de simplification, on ne décrira en détail par la suite que l'un d'eux, en l'occurence l'élément 10, tout en convenant que les mêmes constituants des deux éléments de canalisation 10, 10′ porteront les mêmes références.

Dans l'exemple représenté sur la figure 1, l'élément de canalisation 10 comprend un conduit tubulaire métallique rigide 12 de section approximativement parallélépipédique constituant une enveloppe ou gaine extérieure de protection et se composant d'un corps 13 et d'un couvercle 14 solidarisés l'un à l'autre par tout système de fixation approprié, par exemple par agrafage.

Le conduit 12 est, de préférence, réalisé en matière électriquement conductrice, par exemple en tôle d'acier galvanisé, de manière à pouvoir lui-même servir de conducteur de terre.

Dans cet exemple, le corps 13 du conduit 12 est formé d'un fond 15 surmonté de deux parois latérales 16 se prolongeant chacune vers l'extérieur par une aile d'appui 17 pliée d'équerre en direction opposée au fond 15, tandis que le couvercle 14 du conduit présente une paroi longitudinale 19 parallèle au fond 15, disposée en appui sur les bases des ailes 17 et bordée de deux flancs latéraux 20 venant s'accrocher derrière les ailes 17 afin d'assurer la rétention du couvercle 14 sur le corps 13 du conduit.

Il convient de noter que le corps 13 et le couvercle 14 du conduit métallique peuvent être réalisés d'une seule pièce de tôle profilée par galetage, le couvercle étant rabattu puis fixé par son extrémité libre, par exemple par galetage, sur le corps. Cette réalisation en une seule pièce du conduit procure avantageusement à celui-ci une meilleure rigidité.

Comme il apparaît sur la figure 1, la paroi longitudinale 19 du conduit 12 présente une large découpe d'extrémité 23 en forme approximative de U, pratiquée à partir de l'extrémité à raccorder du conduit de manière à dégager un espace de montage pour un boîtier de raccordement électrique que l'on décrira plus loin.

Le conduit 12 loge un support plat rectangulaire 25 en matière isolante qui est appliqué à plat contre le fond 15 du corps 13 du conduit et qui s'étend dans le sens longitudinal du conduit 12, sensiblement sur toute la longueur de celui-ci, en apparaissant dans la découpe d'extrémité 23. Le support 25 présente une largeur légèrement inférieure à celle du fond 15 du corps 13 du conduit de manière à ménager latéralement un espace libre 27 avec chacune des deux parois latérales 16 du corps du conduit.

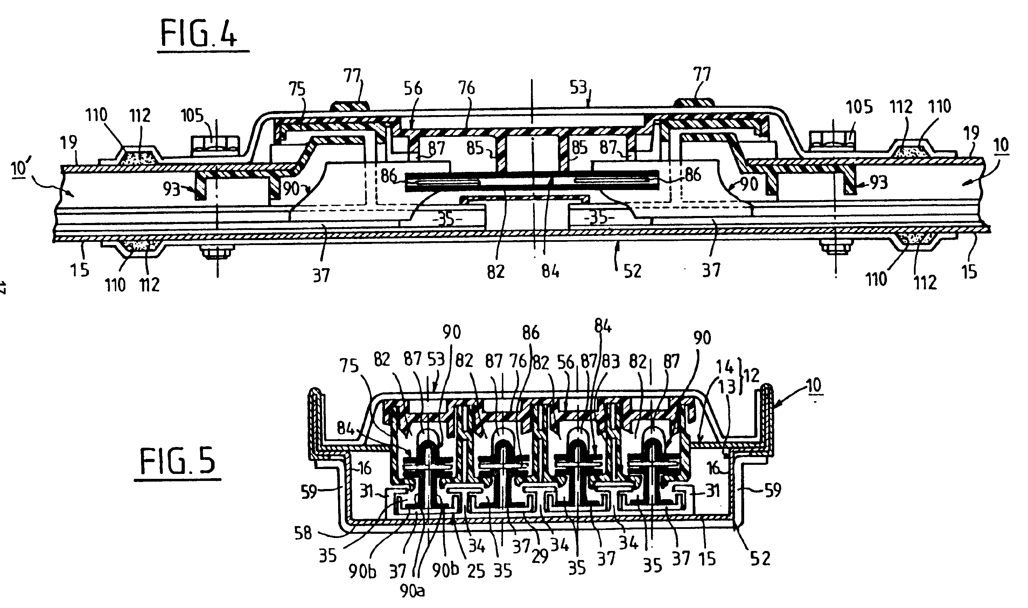

Ce support plat 25 est un profilé réalisé par extrusion d'une matière thermoplastique électriquement isolante. Il comporte, comme on peut le voir sur les figures 5, 7 et 8, une semelle d'appui 29 surmontée perpendiculairement, d'une part, de deux nervures latérales 31 prolongées vers le haut par des ailes pliées à angle droit en se faisant face et, d'autre part, de plusieurs nervures internes 34 en forme de T, notamment trois dans cette forme d'exécution, réparties régulièrement entre les deux nervures latérales 31 et de même hauteur que celles-ci. Ces cinq nervures 31, 34 sont parallèles, s'étendent longitudinalement sur toute la longueur de la semelle 29 du support, viennent d'extrusion avec cette dernière et délimitent entre elles et avec ladite semelle quatre rainures longitudinales parallèles 35 ménagées côte à côte, de même section transversale en C à bords droits, et dans chacune desquelles est logée à plat une barre 37 conductrice de courant de force (voir figures 5, 7 et 8).

Les extrémités à raccorder des barres conductrices 37 apparaissent dans la découpe d'extrémité 23 (figure 1) en étant toutes alignées en léger retrait par rapport au bord latéral du support 25.

Dans la forme d'exécution des figures 5, 7 et 8, les barres conductrices 37 sont identiques et présentent, en section transversale, une forme de U. Elles sont de préférence réalisées en aluminium et sont électriquement isolées les unes des autres par les nervures 31, 34 du support 25. L'épaisseur des barres 37 en U est, par ailleurs, ajustée suivant un calibre de courant donné, lequel calibre peut être choisi parmi les calibres de courant 40 A, 63 A et 100 A qui sont ceux couramment utilisés dans le cadre d'une distribution de petites puissances.

Bien entendu, pour les calibres de courant indiqués précédemment, les barres conductrices peuvent également être réalisées en cuivre et avoir une forme rectangulaire, sans sortir du cadre de l'invention.

Dans le mode d'exécution des figures 5, 7 et 8, les barres conductrices 37 sont au nombre de quatre et correspondent aux conducteurs d'une ligne triphasée avec neutre, le conducteur de terre étant constitué par le conduit 12 lui-même, comme on l'a indiqué plus haut. Dans un autre mode de construction, le conducteur de terre peut être constitué par une autre barre conductrice disposée à plat dans une rainure supplémentaire prévue dans le support plat isolant.

Dans le présent exemple de quatre barres correspondant aux conducteurs d'une ligne triphasée avec neutre, il s'avère souvent utile d'indiquer, par un repérage quelconque, l'emplacement du conducteur de neutre afin de distinguer aisément ce dernier des conducteurs de phase. Ainsi, pour l'élément de canalisation 10 illustré sur les figures 5, 7 et 8, on considèrera par exemple que la barre 37 située à gauche sur ces figures est repérée comme étant le conducteur de neutre.

On a représenté en 40, sur la figure 1, une prise de dérivation réalisée par exemple sous la forme d'un bloc sensiblement parallélépipédique en matière isolante qui est engagé dans une ouverture rectangulaire transversale 41 ménagée dans la paroi longitudinale 19 du conduit 12 et qui fait légèrement saillie hors de ladite paroi. La face supérieure de ce bloc 40 comprend quatre orifices ou perçages alignés 42 situés respectivement en face des quatre barres conductrices pour le passage d'organes de prise de courant amovibles (non figurés) aptes chacun à établir un contact électrique avec une barre conductrice correspondante.

En se reportant à la figure 1, le dispositif 50 de raccordement des deux éléments identiques de canalisation 10, 10′ se compose de deux éclisses, à savoir :

    – une éclisse 51 de jonction mécanique entre les extrémités des conduits 12 des deux éléments de canalisation, composée de deux flasques métalliques 52, 53,

    – une éclisse 55 de jonction électrique entre les extrémités des barres conductrices 37 des deux éléments de canalisation, comprenant un bloc d'éclissage 56 formant connecteur.

On va maintenant décrire en détail l'assemblage bout à bout des deux éléments droits de canalisation 10, 10' à l'aide des deux éclisses de jonction 51, 55 mentionnées ci-dessus, en respectant l'ordre de montage de celles-ci.

Comme il apparaît sur la figure 1, le flasque métallique 52, qualifié par la suite de flasque inférieur, de l'éclisse de jonction mécanique 51 présente une embase plane rectangulaire 58 bordée de deux ailes latérales 59 pliées à angle droit et orientées en sens inverse l'une de l'autre. Ce flasque inférieur 52 reçoit intérieurement par emboîtage les corps 13 des deux conduits 12 qui viennent se joindre bout à bout sensiblement au milieu du flasque ; en position emboîtée, le corps 13 de chacun des deux conduits 12 est appliqué, d'une part, par son fond 15 contre l'embase 58 du flasque 52 et, d'autre part, par ses deux parois latérales 16 contre les deux ailes latérales 59 du flasque 52 (voir figure 5).

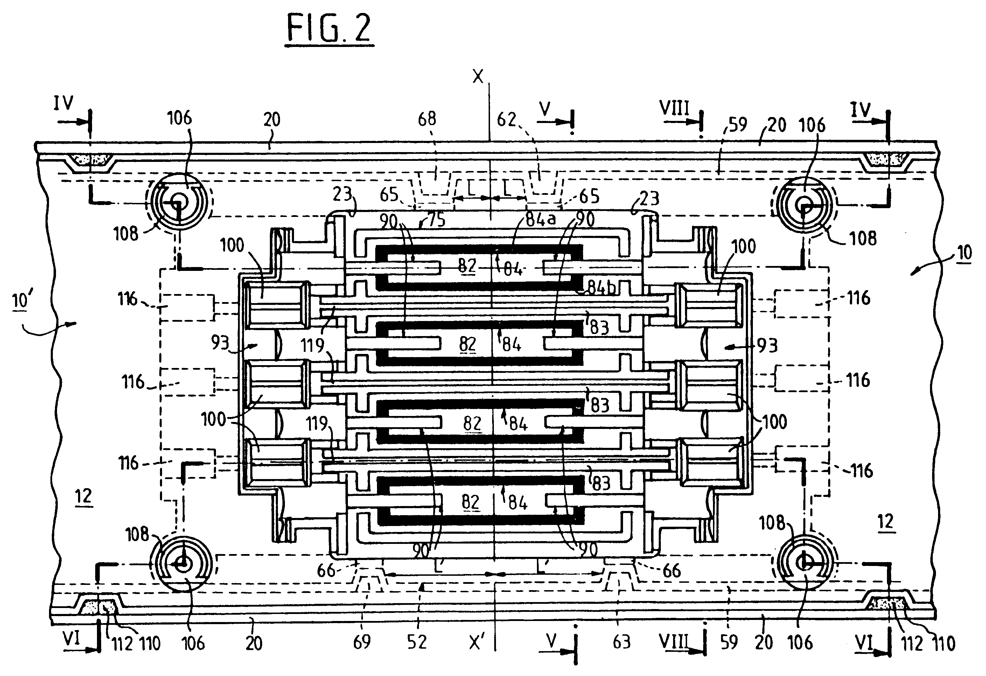

Le flasque inférieur 52 forme donc un demi-manchon de jonction extérieur entre les extrémités des deux conduits 12 en position emboîtée et présente une longueur telle qu'il s'étend en position au-delà des deux découpes d'extrémité contiguës 23 (figure 2).

Ce flasque 52 présente également des moyens de détrompage ne permettant l'emboîtage de chacun des deux corps 13 des conduits 12 que dans un seul sens, de manière à assurer une parfaite concordance entre les conducteurs de phase et de neutre des deux éléments de canalisation 10, 10'.

Dans un mode d'exécution illustré sur les figures 1 et 2, ces moyens de détrompage comportent une première paire de ressauts 62, 63 (figure 2) qui sont formés chacun, par exemple par emboutissage, sur la face interne de l'une des deux ailes latérales 59 du flasque 52 en s'étendant légèrement sur l'embase 58, comme visible à la figure 1, pour le seul ressaut 62, et en étant situés tous deux d'un même premier côté du flasque 52, en l'occurrence le côté droit de la figure 2, par rapport à l'axe transversal médian X-X' du flasque ; ces deux ressauts 62, 63 de la figure 2 sont décalés sur des longueurs différentes, respectivement L, L', par rapport à l'axe X-X' et autorisent l'emboîtage du conduit 12 de l'élément de canalisation 10 uniquement dans le cas où ils s'engagent respectivement dans deux encoches 65, 66 (figure 2) qui sont découpées dans les deux parois latérales 16 du corps dudit conduit et en bordure du fond 15 (figure 1) suivant le même décalage, par rapport au bord transversal du conduit 12, que celui des deux ressauts 62, 63.

D'une manière symétrique à la première paire de ressauts 62, 63 par rapport à l'axe X-X' du flasque 52, une seconde paire de ressauts 68, 69 (figure 2) est prévue sur le côté gauche du flasque 52 de la figure 2 afin d'autoriser l'emboîtage du conduit 12 de l'élément de canalisation 10' uniquement dans le cas où ces ressauts 68, 69 s'engagent dans les deux encoches 65, 66 qui sont découpées dans le corps du conduit de cet élément de canalisation 10' d'une façon identique à celle décrite précédemment.

Il convient de noter que ces deux paires de ressauts 62, 63 et 68, 69 agencées symétriquement par rapport à l'axe médian X-X' du flasque 52 constituent également des moyens d'indexation permettant d'emboîter, à l'intérieur du flasque 52, les deux conduits 12 sur des longueurs égales.

Comme il apparaît sur la figure 1, le flasque métallique 53, qualifié par la suite de flasque supérieur, de l'éclisse de jonction mécanique 51 présente une embase plane rectangulaire 72 bordée de deux ailes latérales 73 et pourvue d'un renflement central 74 obtenu par emboutissage de l'embase, de manière à servir de logement au bloc d'éclissage formant connecteur 56.

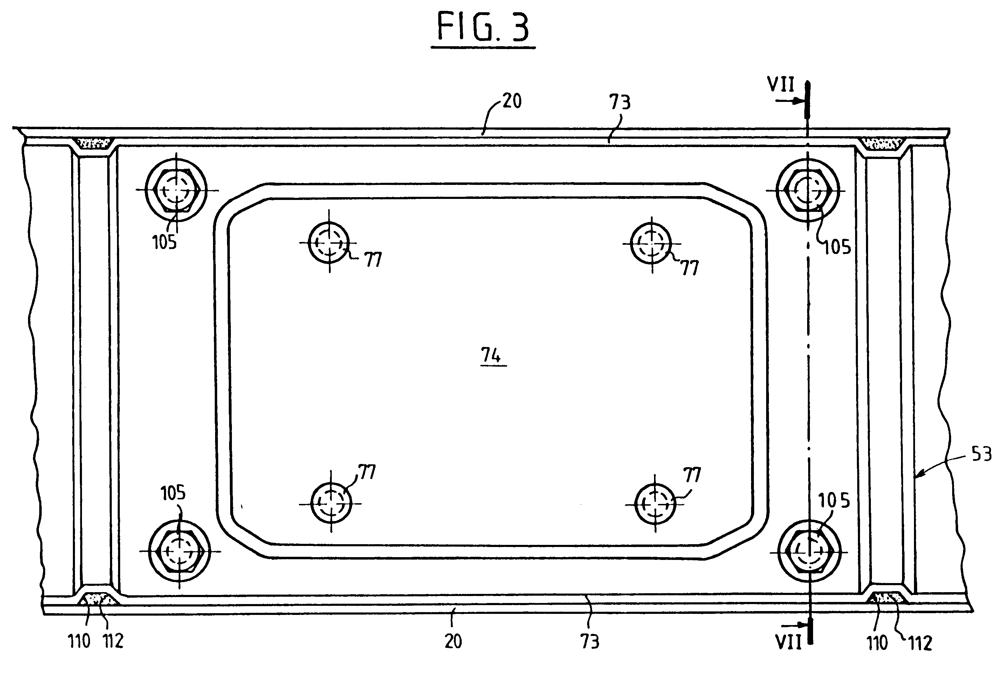

Dans le mode d'exécution illustré sur la figure 1, le bloc d'éclissage 56 se présente sous la forme d'un boîtier sensiblement parallélépipédique en matière isolante comportant un corps 75 et un couvercle 76. Le corps 75 du boîtier 56 comporte, dans sa partie supérieure, quatre tétons 77 qui traversent respectivement quatre orifices correspondants 78 ménagés dans le couvercle 76 et qui viennent s'engager à travers quatre trous correspondants 79 ménagés dans le renflement central 74 du flasque supérieur 53. Le boîtier d'éclissage 56 est alors rendu solidaire du flasque 53 en effectuant par exemple un bouterollage des quatre tétons 77 (voir figures 3, 4 et 6).

On comprend aisément que le fait de rendre solidaire le boîtier d'éclissage formant connecteur 56 du flasque supérieur 53 permettra d'effectuer simultanément l'éclissage électrique des barres conductrices des deux éléments de canalisation et le capotage de l'éclisse mécanique, d'où un gain de temps dans le montage.

Dans l'exemple de réalisation illustré sur les figures 2 et 5, le corps 75 du boîtier d'éclissage 56 comporte quatre logements longitudinaux 82 (figures 2 et 5), aménagés côte à côte parallèlement aux barres conductrices avec le même entraxe que celles-ci, et séparés les uns des autres par des cloisons isolantes 83. Dans chacun de ces logements 82 est placée à plat une pince de contact 84 dont le maintien en position est opéré par des nervures d'appui 85 (figure 4) prévues sur la face interne du couvercle 76 du boîtier. Les deux branches 84a, 84b de chaque pince 84 (figure 2) sont reliées entre elles par deux étriers 86 formant entretoises (figures 4 et 5) et sont dégagées à leurs extrémités grâce à des encoches 87 (figures 4 et 5) ménagées chacune dans le fond et une paroi latérale du logement correspondant 82.

Suivant une caractéristique importante de l'invention, chaque pince de contact 84 coopère, à chacune de ses deux extrémités dégagées, avec un étrier d'éclissage en matière électriquement conductrice, désigné par le repère général 90, qui est monté perpendiculairement sur le fond de la barre correspondante 37 en U, au niveau de l'extrémité à raccorder de celle-ci, laquelle barre 37 repose à plat, sur toute sa longueur, dans la rainure correspondante 35 du support 25 (voir figures 4 et 5).

Les étriers d'éclissage 90 associés respectivement aux extrémités des barres conductrices 37 de chacun des deux éléments de canalisation 10, 10' s'étendent chacun dans le sens de la longueur de la barre en apparaissant dans la découpe d'extrémité correspondante 23 et en faisant saillie perpendiculairement au plan du support 25 (voir figure 1).

Chaque étrier 90, figure 5, présente en section droite une forme approximative d'Ω dont les deux faces latérales 90a de sa partie centrale sont planes et dont les deux pattes latérales 90b sont rapportées sur le fond de la barre correspondante 37 en U par tout moyen de fixation approprié.

Dans le cadre de barres conductrices en U réalisées en aluminium, chaque étrier d'éclissage 90 est en bimétal cuivre-aluminium et est fixé par ses deux pattes latérales 90b sur le fond de la barre associée en aluminium 37, soit par un soudage électrique par points, soit par un soudage par ultrasons.

Il convient de noter que chaque étrier bimétallique 90 en Ω peut être revêtu, sur les faces latérales de sa partie centrale, de métallisations par exemple en argent qui s'étendent sur toute la longueur de l'étrier et qui forment des pistes de contact localisées destinées à recevoir par embrochage l'extrémité correspondante d'une pince de contact.

Comme le montre la figure 4, le raccordement électrique entre deux barres conductrices disposées en regard et appartenant l'une à l'élément de canalisation 10 et l'autre à l'élément de canalisation 10' s'effectue, au cours de la mise en place du boîtier d'éclissage 56, par embrochage des deux extrémités dégagées de la pince de contact correspondante 84 sur les deux étriers d'éclissage 90 disposés en regard et associés respectivement aux deux barres 37.

On notera que chaque logement 82 du boîtier d'éclissage 56, figure 5, présente une profondeur qui permet de disposer en empilement plusieurs pinces de contact, dont le nombre est déterminé suivant l'intensité du courant à transporter par les barres conductrices ; dans ce cas, les nervures d'appui prévues sur la face interne du couvercle du boîtier d'éclissage présentent une hauteur appropriée de façon à maintenir en position les pinces superposées dans chaque logement.

Selon une autre caractéristique de l'invention, les étriers d'éclissage 90 associés aux barres conductrices de chacun des deux éléments de canalisation 10, 10' (figure 1) sont maintenus en relation d'isolation électrique mutuelle dans la découpe d'extrémité correspondante 23 au moyen d'un embout d'extrémité 93 en matière isolante qui est encastré transversalement à l'axe du conduit 12 dans la partie arrière de la découpe 23 (voir figures 1 et 2).

Dans l'exemple de réalisation illustré à la figure 1, l'embout d'extrémité 93 associé à l'élément de canalisation 10 se présente sous la forme d'un bloc sensiblement parallélépipédique comportant, en sa face avant, quatre alvéoles 95 aménagées côte à côte parallèlement aux barres conductrices 37 avec le même entraxe que celles-ci, et séparées les unes des autres par des cloisonnements 97. Chacune de ces alvéoles 95 loge et guide une partie seulement d'un étrier d'éclissage 90 en Ω, la partie restante de ce dernier faisant saillie hors de l'alvéole et constituant la zone d'embrochage pour l'une des extrémités de la pince de contact correspondante logée dans le boîtier d'éclissage.

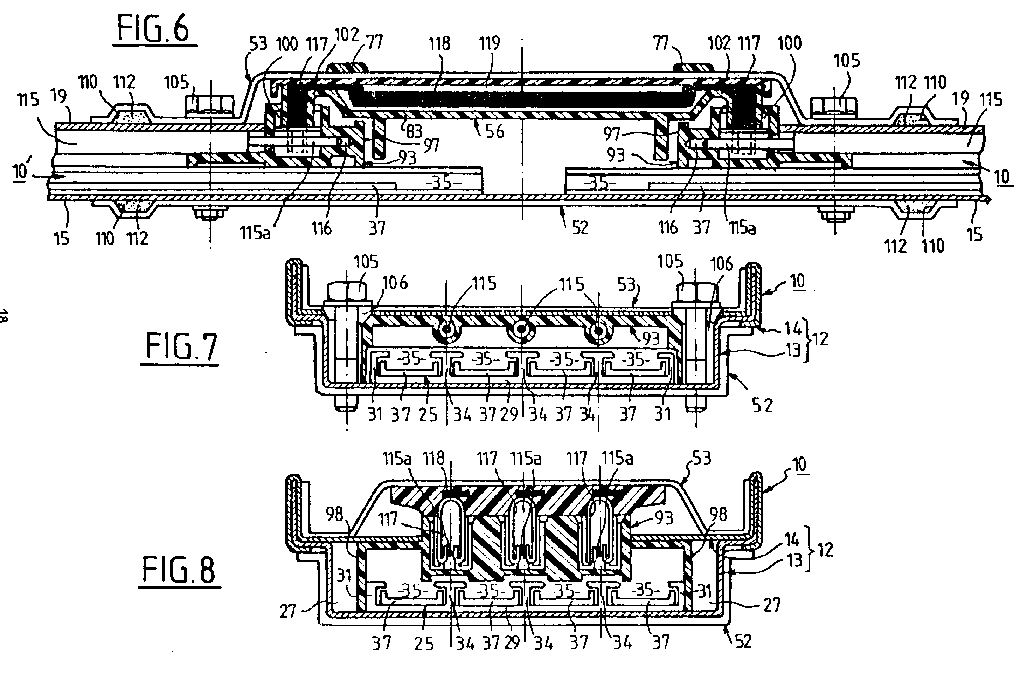

Comme on le voit sur la figure 1, les trois cloisonnements 97 de l'embout d'extrémité 93 s'appliquent à plat sur la face supérieure des trois nervures internes 34 en T du support 25, tandis que deux pattes ou jambes latérales 98 (figure 8) prévues sur ledit embout 93 reposent chacune sur le fond du conduit 12, dans l'espace latéral libre 27, et sont respectivement en léger appui contre le bord extérieur des deux nervures latérales 31 du support 25. Lorsque la canalisation électrique obtenue par l'assemblage des éléments 10, 10' est en service, les cloisonnements 97 et les jambes 98 de chaque embout 93 permettent de plaquer suffisamment le support 25, et donc indirectement les barres conductrices 37, contre le fond du conduit de façon à obtenir une bonne conduction thermique desdites barres tout en autorisant un certain coulissement longitudinal du support 25 en cas de dilatation de celui-ci.

La face supérieure de l'embout d'extrémité 93, figure 1, comporte trois perçages ou orifices 100 réalisés chacun au niveau de l'un des cloisonnements 97 et destinés à recevoir trois supports 102 (figure 1) alignés sur l'un des bords latéraux du boîtier d'éclissage 56 et s'étendant dans un plan perpendiculaire au boîtier, de manière à permettre le centrage du boîtier d'éclissage lors du montage de celui-ci.

Après emboîtage des conduits 12 des deux éléments de canalisation 10, 10' dans le flasque inférieur 52, le boîtier d'éclissage 56 solidaire du flasque supérieur 53 est alors positionné dans l'espace libéré par les deux découpes d'extrémité contiguës 23 par introduction des trois supports 102 dans les trois orifices correspondants 100 de l'embout 93 de chacun des deux éléments de canalisation 10, 10'. Lors de ce positionnement du boîtier d'éclissage 56, les pinces de contact 84 logées dans le boîtier viennent s'engager élastiquement par leurs extrémités dégagées sur les étriers 90 en Ω associés aux barres conductrices 37 des deux conduits, assurant ainsi le raccordement bout à bout des barres ; simultanément, le flasque supérieur 53 vient s'appliquer sur les couvercles 14 des deux conduits 12 et forme donc un demi-manchon de jonction extérieur entre les deux conduits. Le bridage des deux flasques 52, 53 est assuré de façon classique au moyen de quatre boulons 105 montés de façon imperdable sur le flasque supérieur 53 et traversant quatre ouvertures 106 (figures 1 et 2) ménagées deux par deux dans chacun des deux conduits 12.

Comme le montre la figure 2, l'embout d'extrémité 93 associé à chacun des deux éléments de canalisation 10, 10' présente, au niveau de sa face arrière, deux canons latéraux 108 placés respectivement dans les deux ouvertures correspondantes 106 du conduit 12 et servant de guides pour le passage des boulons lors du bridage des deux flasques 52, 53. Chacun de ces deux canons 108 constitue avantageusement une entretoise agencée entre le fond du corps 13 du conduit correspondant 12 et le couvercle 14 de manière à empêcher toute déformation du conduit lors du boulonnage.

Afin d'assurer l'étanchéité au niveau de l'éclissage, la face interne de chacun des deux flasques 52, 53 présente, à chacune de ses extrémités, une rainure 110 qui s'étend transversalement sur toute la largeur du flasque, et dans laquelle est logé fixement un joint d'étanchéité 112.

En plus du raccordement électrique des barres conductrices de puissance des deux éléments de canalisation 10, 10', il est également possible de relier électriquement des conducteurs isolés à courant faible disposés longitudinalement dans ces deux éléments de canalisation et utilisables à des fins de télécommande ou de télétransmission.

Dans l'exemple de réalisation illustré sur les figures 6 et 7, le conduit 12 de chacun des deux éléments de canalisation loge trois conducteurs 115 à courant faible qui s'étendent parallèlement dans le sens longitudinal du conduit 12.

Dans cet exemple, l'embout d'extrémité 93 associé à chacun des deux éléments de canalisation 10, 10' comporte trois canaux parallèles 116, visibles à la figure 2, ayant chacun deux extrémités dont l'une débouche en face arrière de l'embout et dont l'autre est fermée en face avant de l'embout par l'un des cloisonnements 97 (voir figure 6). Chacun de ces canaux 116, figure 6, reçoit en extrémité avant une portion dénudée 115a du conducteur correspondant 115.

Comme le montre la figure 2, les trois orifices alignés 100 de l'embout 93 considéré communiquent respectivement avec les trois canaux 116 dudit embout et donnent chacun accès à la portion dénudée 115a du conducteur correspondant 115 (figure 6).

Le boîtier d'éclissage 56 comporte également des organes de connexion électrique aptes à établir une liaison électrique entre chaque portion dénudée 115a du conducteur 115 de l'élément de canalisation 10 et une portion dénudée 115a du conducteur correspondant 115 de l'autre élément de canalisation 10'.

Dans le mode d'exécution illustré sur les figures 6 et 8, chaque organe de connexion est constitué de deux pinces conductrices 117 (figure 6) logées respectivement dans les deux supports isolants 102 qui sont agencés en alignement de part et d'autre d'une cloison de séparation 83 (figure 6) et qui sont encochés pour découvrir les deux branches de la pince correspondante. Comme le montre la figure 6, les deux pinces 117 sont reliées électriquement l'une à l'autre au moyen d'une lame conductrice 118 insérée dans une fente longitudinale 119 ménagée dans le bord supérieur de la cloison correspondante 83.

De façon avantageuse, le montage du boîtier d'éclissage 56 permet de réaliser simultanément le raccordement électrique des barres conductrices de puissance par embrochage des pinces de contact 84 sur les étriers 90 en Ω associés aux barres comme on l'a vu précédemment, et le raccordement électrique des conducteurs 115 au moyen de trois paires de pinces 117 venant coopérer chacune avec les deux portions dénudées 115a des conducteurs disposés en regard par introduction dans les deux orifices correspondants 100 associés respectivement aux deux embouts d'extrémité 93 (voir figures 6 et 8).

**Revendications**

1. Dispositif de raccordement de deux éléments de canalisation électrique préfabriquée mis bout à bout en alignement rectiligne, chaque élément de canalisation (10 ; 10') comprenant :
   – un conduit tubulaire métallique (12) de section approximativement parallélépipédique se composant d'un corps (13) et d'un couvercle (14) solidaire du corps, ledit couvercle présentant, à partir de l'extrémité de raccordement du conduit, une large découpe longitudinale d'extrémité (23),
   – un support plat rectangulaire (25) en matière plastique électriquement isolante qui s'étend longitudinalement à l'intérieur du conduit (12) en apparaissant dans la découpe d'extrémité du couvercle du conduit et en étant appliqué par sa face inférieure contre le fond du corps du conduit, ledit support étant creusé à partir de sa face supérieure d'une pluralité de rainures parallèles (35), réparties régulièrement sur toute la largeur du support et développées longitudinalement sur toute la longueur de celui-ci, et dans chacune desquelles est logée à plat une barre conductrice de courant (37) apparaissant à son extrémité à raccorder dans la découpe d'extrémité (23) du couvercle du conduit,
   – au moins une prise de dérivation (40) disposée dans le couvercle (14) du conduit et pourvue d'orifices (42) situés en face des barres conductrices,
le dispositif de raccordement comportant :
   – une éclisse (51) de jonction mécanique entre les extrémités des conduits (12) des deux éléments de canalisation mis bout à bout, composée de deux flasques métalliques (52, 53) qui recouvrent extérieurement, l'un (52), les deux corps (13) des conduits, et l'autre (53), les deux couvercles (14) des conduits en s'étendant tous deux au-delà des deux découpes d'extrémité des conduits, et qui sont rendus solidaires l'un de l'autre au moyen d'organes de serrage (105),
– une éclisse (55) de jonction électrique entre les extrémités des barres conductrices (37) des deux éléments de canalisation mis bout à bout, comportant un bloc d'éclissage formant connecteur (56) qui est porté par la face interne du flasque (53) recouvrant les deux couvercles des conduits et qui est muni de pinces de contact (84) aptes à établir une liaison électrique entre chaque barre conductrice de l'un des éléments de canalisation et une barre conductrice correspondante de l'autre élément de canalisation,
caractérisé en ce que, l'extrémité à raccorder de chacune des barres conductrices (37) des deux éléments de canalisation reposant à plat dans la rainure correspondante (35) du support, chaque pince de contact (84) coopère à chacune de ses deux extrémités avec un étrier d'éclissage (90) en matière électriquement conductrice monté fixement d'équerre sur ladite extrémité correspondante de la barre conductrice (37).

2. Dispositif selon la revendication 1, caractérisé en ce que les étriers d'éclissage (90) associés respectivement aux extrémités à raccorder des barres conductrices (37) de chacun des deux éléments de canalisation s'étendent dans le sens longitudinal des barres en faisant saillie perpendiculairement au plan du support (25) des barres et présentent chacun en section transversale une forme approximative d' Ω, dont les deux faces latérales de la partie centrale sont planes et reçoivent par embrochage l'extrémité correspondante de l'une des pinces de contact (84) du bloc d'éclissage (56).

3. Dispositif selon la revendication 2, caractérisé en ce que le bloc d'éclissage (56) comprend un boîtier isolant de forme sensiblement parallélépipédique qui est monté fixement par sa face supérieure dans une concavité centrale formée dans la face interne du flasque (53) recouvrant les deux couvercles des conduits et qui comporte une pluralité de logements longitudinaux (82) en nombre égal à celui des barres conductrices (37) de chaque élément de canalisation, aménagés côte à côte parallèlement aux barres avec le même entraxe que celles-ci, et séparés les uns des autres par des cloisons isolantes (83), chacun de ces logements renfermant une pince de contact (84) en opérant le maintien de celle-ci et présentant dans son fond deux encoches (87) de dégagement respectif des deux extrémités d'embrochage de la pince pour permettre à celle-ci de venir s'appliquer sur deux étriers d'éclissage (90) en Ω disposés en regard.

4. Dispositif selon la revendication 3, caractérisé en ce que chaque logement (82) du boîtier présente une profondeur qui permet de disposer en empilement plusieurs pinces de contact (84) dont le nombre est déterminé suivant l'intensité du courant à transporter par les barres.

5. Dispositif selon l'une des revendications 2 à 4, caractérisé en ce que les étriers d'éclissage (90) en Ω associés respectivement aux extrémités à raccorder des barres conductrices de chacun des deux éléments de canalisation sont maintenus en relation d'isolation électrique mutuelle dans la découpe d'extrémité (23) du couvercle du conduit correspondant au moyen d'un embout isolant d'extrémité (93) de forme sensiblement parallélépipédique qui est encastré transversalement à l'axe longitudinal du conduit dans la découpe de celui-ci et qui comporte, en sa face avant, une pluralité d'alvéoles (95) en nombre égal à celui des barres conductrices de l'élément de canalisation correspondant, aménagées côte à côte parallèlement aux barres avec le même entraxe que celles-ci, et séparées les unes des autres par des cloisonnements (97), chacune de ces alvéoles logeant une partie seulement d'un étrier d'éclissage (90) en Ω, la partie restante de l'étrier faisant saillie hors de l'alvéole associée et constituant une aire d'embrochage pour l'une des extrémités de la pince de contact correspondante (84).

6. Dispositif selon la revendication 5, caractérisé en ce que l'embout d'extrémité (93) de chacun des deux éléments de canalisation comporte des canaux parallèles (116) s'étendant longitudinalement et ayant chacun deux extrémités dont l'une débouche en face arrière de l'embout et dont l'autre est fermée en face avant de l'embout par l'un des cloisonnements (97) de séparation des alvéoles, ces canaux recevant chacun l'extrémité dénudée (115a) d'un conducteur électrique (115) à courant faible s'étendant longitudinalement à l'intérieur du conduit de l'élément de canalisation correspondant, que la face supérieure de l'embout (93) comporte des perçages (100) communiquant respectivement avec les canaux (116) et donnant chacun accès à l'extrémité dénudée (115a) d'un des conducteurs, et que le bloc d'éclissage (56) comporte des organes de connexion électrique (117, 118) aptes à établir une liaison électrique entre chaque extrémité dénudée de conducteur de l'un des éléments de canalisation et une extrémité dénudée du conducteur correspondant de l'autre élément de canalisation par engagement respectif dans deux perçages correspondants associés respectivement aux deux embouts d'extrémité.

7. Dispositif selon les revendications 3 et 6, caractérisé en ce que chaque organe de connexion est constitué de deux pinces conductrices (117) logées respectivement dans deux supports isolants (102) solidaires du boîtier du bloc d'éclissage (56) et s'étendant dans un plan perpendiculaire au boîtier en étant agencés en alignement de part et d'autre d'une des cloisons de séparation, chacun des deux supports étant encoché pour découvrir les lames de la pince correspondante (117), et les deux pinces étant reliées électriquement l'une à l'autre au moyen d'une lame conductrice (118) insérée dans une fente longitudinale (119) ménagée dans le bord supérieur de la cloison de séparation (83).

8. Dispositif selon l'une des revendications 5 à 7, dans lequel les organes de serrage des deux flasques métalliques sont constitués par quatre boulons (105), caractérisé en ce que l'embout d'extrémité (93) de chacun des deux éléments de canalisation est doté, au niveau de sa face arrière, de deux canons latéraux (108) de guidage de boulons, chacun de ces canons de guidage constituant une entretoise agencée entre le fond du corps du conduit correspondant et le couvercle de celui-ci, de manière à empêcher toute déformation du conduit (12) lors du boulonnage.

9. Dispositif selon l'une des revendications précédentes, caractérisé en ce que le flasque métallique (52) servant à recouvrir les deux corps des conduits se compose d'une embase rectangulaire plane (58) bordée de deux ailes latérales (59) et reçoit par emboîtage une partie de chacun des deux corps (13) des conduits, chaque corps de conduit venant s'appliquer, d'une part, par son fond (15) contre l'embase (58) du flasque et, d'autre part, par ses deux parois latérales (16) contre les deux ailes (59) du flasque, respectivement, et que ledit flasque (52) présente des moyens de détrompage ne permettant l'emboîtage de chacun des deux corps des conduits que dans un seul sens.

10. Dispositif selon la revendication 9, caractérisé en ce que les moyens de détrompage comportent une première paire de ressauts (62, 63) répartis respectivement sur la face interne des deux ailes latérales (59) du flasque (52) en étant situés tous deux d'un même premier côté du flasque par rapport à l'axe transversal (X-X') du flasque passant par le milieu de celui-ci et en étant décalés tous deux sur des longueurs différentes (L, L') par rapport audit axe transversal, et une seconde paire de ressauts (68, 69) situés d'un même second côté du flasque opposé au premier et positionnés symétriquement aux ressauts de la première paire par rapport audit axe transversal du flasque, les deux ressauts de chacune des première (62, 63) et seconde (68, 69) paires autorisant l'emboîtage d'un des deux conduits dans le flasque uniquement dans le cas où les deux ressauts s'engagent respectivement dans deux encoches correspondantes (65, 66) découpées respectivement dans les deux parois latérales du corps du conduit correspondant suivant le même décalage, par rapport à l'extrémité du conduit, que celui des deux ressauts.

11. Dispositif selon la revendication 10, caractérisé en ce que les première (62, 63) et seconde (68, 69) paires de ressauts du flasque (52) constituent des moyens d'indexation permettant d'emboîter, à l'intérieur dudit flasque, les deux conduits (12) sur des longueurs égales.

12. Dispositif selon l'une des revendications précédentes, caractérisé en ce que la face interne de chacun des deux flasques métalliques (52, 53) présente à chacune de ses extrémités une rainure (110) s'étendant transversalement sur toute la largeur du flasque et dans laquelle est logé fixement un joint d'étanchéité (112).

## Patentansprüche

1. Anschlussvorrichtung für zwei gradlinig aneinandergefügte vorgefertigte elektrische Kabelkanalelemente, wobei jedes Kanalelement (10, 10') aufweist :

   – eine Rohrleitung aus Metall (12) mit einem etwa quaderförmigen querschnitt, bestehend aus einem Körper (13) und einer, mit dem Körper fest verbundenen Haube (14), wobei besagte Haube, vom Verbindungsende der Leitung ausgehend, mit einem breiten endseitigen Längsausschnitt (23) versehen ist,

   – eine flache, rechteckige Auflage (25) aus elektrisch isolierendem Plastikmaterial, die sich in Längsrichtung in der Leitung (12) erstreckt, die im Endausschnitt der Leitungshaube erscheint und deren Unterseite gegen den Boden des Leitungskörpers anliegt, wobei in besagter Auflage von der Oberseite aus eine Vielzahl von parallelen Rinnen (35) angebracht ist, die regelmässig über die gesamte Breite der Auflage verteilt sind und sich in Längsrichtung über deren gesamte Länge erstrecken und in jeder von ihnen eine Stromschiene (37) flach angeordnet ist, deren zu verbindendes Ende im Endausschnitt (23) der Leitungshaube erscheint,

   – mindestens eine, in der Haube (14) angeordnete, Stromabzweigung (40), die mit gegenüber den Stromschienen angeordneten Öffnungen (42) versehen ist,

und die Anschlussvorrichtung aufweist :

   – eine Lasche (51) zur mechanischen Verbindung der Enden der Leitungen (12) der beiden aneinandergefügten Kabelkanalelemente, wobei besagte Lasche aus zwei Metallplatten (52, 53) besteht, von denen eine (52) von aussen die beiden Körper (13) der Leitungen überdeckt und die andere (53) die beiden Hauben (14) der Leitungen und beide sich über die Endausschnitte der Leitungen hinaus erstrecken und durch Klemmteile (105) fest miteinander verbunden sind,

– eine Lasche (55) zur elektrischen Verbindung der Enden der Stromschienen (37) der beiden aneinandergefügten Kabelkanalelemente, welche eine Verlaschungseinheit, die als Verbinder (56) dient, aufweist und diese Einheit von der Innenseite der Platte (53), welche die beiden Leitungshauben überdeckt, getragen wird und mit Kontaktklemmen (84) versehen ist, die eine elektrische Verbindung zwischen jeder Stromschiene eines der Kabelkanalelemente und einer entsprechenden Stromschiene des anderen Kabelkanalelementes herstellen können,

dadurch gekennzeichnet, dass, während das zu verbindende Ende einer jeden Stromschiene (37) der beiden Kabelkanalelemente flach in der entsprechenden Rinne (35) der Auflage ruht, jede Kontaktklemme (84) an jedem ihrer Enden mit einem, rechtwinklig fest auf das entsprechende Ende der Stromschiene (37) montierten Verbindungsbügel (90) aus elektrisch leitendem Material zusammenarbeitet.

2. Vorrichtung nach Anspruch 1, dadurch gekennzeichnet, dass die jeweils den zu verbindenden Enden der Stromschienen (37) eines jeden der Kabelkanalelemente zugeordneten Verbindungsbügel (90) sich in Längsrichtung der Stromschienen erstrecken, senkrecht zur Ebene der Auflage (25) der Stromschienen hervorragen und jeweils im querschnitt etwa die Form eines Omega haben, dessen zwei Seitenflächen des Mittelteils flach sind und das entsprechende Ende einer der Kontaktklemmen (84) der Verbindungseinheit (56) eingesteckt wird.

3. Vorrichtung nach Anspruch 2, dadurch gekennzeichnet, dass die Verbindungseinheit (56) ein im wesentlichen quaderförmiges Isoliergehäuse aufweist, das, mittels seiner Oberseite fest in eine zentrale Austiefung montiert ist, welche in der Innenseite der Platte (53) angebracht ist, die die beiden Hauben der Leitungen überdeckt und besagtes Gehäuse eine Vielzahl von Längsbehausungen (82) aufweist, deren Zahl der Zahl der Stromschienen (37) eines jeden Kabelkanalelementes entspricht und besagte Behausungen parallel zu den Stromschienen nebeneinander angeordnet sind, mit dem gleichen Achsenabstand wie diese, und voneinander durch Isolierwände (83) getrennt sind, wobei jede Behausung eine Kontaktklemme (84) aufweist und haltert und auf ihrem Boden zwei Einkerbungen (87) aufweist, die jeweils die beiden Einsteckenden der Klemmen freimachen, damit die letzere auf zwei omegaförmige, einander gegenüber angeordnete Verbindungsbügel (90) aufgebracht werden kann.

4. Vorrichtung nach Anspruch 3, dadurch gekennzeichnet, dass jede Behausung (82) des Gehäuses eine Tiefe hat,die es ermöglicht, mehrere Kontaktklemmen (84) übereinander anzuordnen, deren Anzahl von der Stärke des Stromes abhängt, den die Stromschienen transportieren sollen.

5. Vorrichtung nach einem der Ansprüche 2 bis 4, dadurch gekennzeichnet, dass die omegaförmigen, jeweils den zu verbindenden Enden der Stromschienen eines jeden Kabelkanalelementes zugeordneten Verbindungsbügel (90) elektrisch gegeneinander isoliert im Endausschnitt (23) der entsprechenden Leitungshaube gehalten werden, mittels eines etwa quaderförmigen isolierenden Endstückes (93), das, quer zur Leitungslängsachse, im Ausschnitt dieser Leitung eingebettet ist und auf seiner Vorderseite eine Vielzahl von Buchsen (95) aufweist, deren Anzahl der Anzahl der Stromschienen des entsprechenden Kabelkanalelementes entspricht und die parallel zu den Stromschienen nebeneinander angeordnet sind, mit dem gleichen Achsenabstand wie diese und durch Trennwände (97) voneinander getrennt sind, wobei jede dieser Buchsen nur einen Teil des omegaförmigen Verbindungsbügels (90) aufnimmt und der restliche Teil des Bügels aus der zugeordneten Buchse herausragt und einen Aufsteckbereich für eines der Enden der entsprechenden Kontaktklemme (84) bildet.

6. Vorrichtung nach Anspruch 5, dadurch gekennzeichnet, dass das Endstück (93) eines jeden der beiden Kabelkanalelemente parallele, sich in Längsrichtung erstreckende Kanäle (116) aufweist, mit jeweils zwei Enden, deren eines auf der Rückseite des Endstückes mündet und deren anderes auf der Vorderseite des Endstückes von einer der Wände (97) welche die Buchsen voneinander trennen, verschlossen wird und jeder dieser Kanäle das blanke Ende (115a) eines elektrischen, sich längs innerhalb der Leitung des entsprechenden Kabelkanalelementes erstreckenden Schwachstromleiters (115) aufnimmt, dass die Oberseite des Endstückes (93) mit Bohrungen (100) versehen ist, die jeweils mit den Kanälen (116) in Verbindung stehen und jeweils das nackte Ende (115a) eines der Leiter zugänglich machen, und dass die Verbindungseinheit (56) elektrische Verbindungsorgane (117, 118) aufweist, zur elektrischen Verbindung zwischen jedem nackten Ende des Leiters eines der Kabelkanalelemente und einem nackten Ende eines entsprechenden Leiters des anderen Kabelkanalelemente, durch Einführen in zwei entsprechende, jeweils den beiden Endstücken zugeordnete Bohrungen.

7. Vorrichtung nach den Ansprüchen 3 und 6, dadurch gekennzeichnet, dass jedes Verbindungsorgan aus zwei leitenden Klemmen (117) besteht, die jeweils in zwei Isolierträgern (102) angeordnet sind, welche mit dem Gehäuse der Verbindungseinheit (56) fest verbunden sind, sich senkrecht zur Ebene des Gehäuses erstrecken und zu jeder Seite einer der Trennwände angeordnet sind, wobei jeder der Träger eine Einkerbung besitzt, und die Schenkel der entsprechenden Klemme (117) durch eine leitende, in einen Längsschlitz (119) am oberen Rand der Trennwand (83) angeordnete Lamelle (118) verbunden sind.

8. Vorrichtung nach einem der Ansprüche 5 bis 7, in welcher die Klemmorgane der beiden Metallplatten durch vier Bolzen (105) gebildet werden, dadurch gekennzeichnet, dass das Endstück (93) eines jeden der beiden Kabelkanalelemente auf der Rückseite zwei seitliche Führungshülsen (108) für die Bolzen aufweist und jede dieser Führungshülsen eine zwischen dem Körperboden der entsprechenden Leitung und deren Haube angeordnete Versteifung bildet, sodass ein Verformen der Leitung (12) während der Bolzenverbindung verhindert wird.

9. Vorrichtung nach einem der vorhergehenden Ansprüche, dadurch gekennzeichnet, dass die die beiden Leitungskörper überdeckende Metallplatte (52) eine flache, rechteckige von zwei Seitenflügeln (59) flankierte Basis (58) aufweist und durch Steckverbindung einen Teil eines jeden der beiden Leitungskörper (13) aufnimmt, wobei einerseits der Boden (15) eines jeden Leitungskörpers auf der Basis (58) der Platte ruht und andererseits die beiden Seitenfläche (16) auf den Flügeln (59) der Metallplatte und besagte Metallplatte (52) Unverwechselbarkeitsmittel aufweist, die eine Steckverbindung eines jeden der beiden Leitungskörper nur in einer Richtung möglich machen.

10. Vorrichtung nach Anspruch 9, dadurch gekennzeichnet, dass die Unverwechselbarkeitsmittel zwei erste Vorsprünge (62, 63) aufweisen, die jeweils auf der Innenseite der beiden Seitenflügel (59) der Metallplatte (52) und beide auf der gleichen ersten Seite der Platte im Verhältnis zu deren mittlerer querachse (X-X') angeordnet sind und beide, im Verhältnis zu besagter querachse über eine verschiedene Länge (L, L') verschoben sind, sowie zwei zweite, auf der gleichen zweiten, der ersten gegenüberliegenden, Seite der Platte angeordnete, Vorsprünge (68, 69), die im Verhältnis zur besagten querachse der Platte symmetrisch zu den Vorsprüngen des ersten Paares angeordnet sind, wobei die Vorsprünge des ersten (62, 63) und des zweiten (68, 69) Paares die Steckverbindung einer der beiden Leitungen in die Metallplatte nur möglich machen, wenn die beiden Vorsprünge jeweils in zwei entsprechende Einkerbungen (65, 66) eintreten können, welche jeweils in den beiden Seitenwänden des entsprechenden Leitungskörpers mit demselben Abstand im Verhältnis zum Leitungsende wie die beiden Vorsprünge angebracht sind.

11. Vorrichtung nach Anspruch 10, dadurch gekennzeichnet, dass das erste (62, 63) und zweite (68, 69) Paar Vorsprünge der Metallplatte (52) Indexiermittel bilden, die es ermöglichen, die beiden Leitungen (12) über die gleiche Länge in besagte Metallplatte einzuführen.

12. Vorrichtung nach einem der vorhergehenden Ansprüche, dadurch gekennzeichnet, dass die Innenfläche jeder Metallplatte (52, 53) an jeden Ende eine sich quer über die gesamte Breite der Platte erstreckende Rinne (110) aufweist, in welcher eine Dichtung (112) stationär angeordnet ist.

**Claims**

1. A device for connecting together two prefabricated electric ducting elements placed end to end in rectilinear alignment, each ducting element (10, 10') comprising :
– a metal tubular conduit (12) of approximately parallelepipedic section formed of a body (13) and a cover (14) fast with the body, said cover having, from the connection end of the conduit, a wide longitudinal end cut-out (23),
– a flat rectangular plastic material electrically insulating support (25) which extends longitudinally inside the conduit (12) while appearing in the end cut-out of the cover of the conduit and being applied by its lower face against the bottom of the body of the conduit, said support being formed from its upper face with a plurality of parallel grooves (35), spaced apart evenly over the whole width of the support and developed longitudinally over the whole length thereof, and in each of which a current conducting bar (37) is housed flat appearing, at its end to be connected, in the end cut-out (23) of the cover of the conduit,
– at least one tapping connector (40) disposed in the cover (14) of the conduit and having orifices (42) situated opposite the conducting bars, the connecting device comprising :
– a fish-plate (51) for mechanical junction between the ends of the conduits (12) of the two ducting elements placed end to end formed of two metal plates (52, 53), one (52) of which covers externally the two bodies (13) of the conduits and the other (53) the two covers (14) of the conduits while both extend beyond the two end cut-outs of the conduits, and which are secured together by clamping means (105),
– a fish-plate (55) for the electric junction between the ends of the conducting bars (37) of the two ducting elements placed end to end, comprising a fish-plating block forming a connector (56) which is carried by the internal face of the plate (53) covering the two covers of the conduits and which is provided with contact clips (84) capable of establishing an electric connection between each conducting bar of one of the ducting elements and a corresponding conducting bar of the other ducting element, characterized in that, with the end to be connected of each of the conducting bars (37) of the two ducting elements resting flat in the corresponding groove (35) of the support, each contact clip (84) cooperates at each of its two ends with a fish-plating stirrup (90) made from an electrically conducting material mounted fixedly at right-angles on said corresponding end of the conducting bar (37).

2. The device as claimed in claim 1, characterized in that the fish-plating stirrups (90) associated respectively with the ends to be connected of the conducting bars (37) of each of the two ducting elements extend in the longitudinal direction of the bars while projecting perpendicularly to the plane of the support (25) of the bars and each has in cross section an approximate omega shape, the two lateral faces of the central part of which are flat and in which the corresponding end of one of the contact clips (84) of the fish-plating block (56) is fitted.

3. The device as claimed in claim 2, characterized in that said fish-plating block (56) comprises an insulating case of substantially parallelepipedic shape which is mounted fixedly by its upper face in a central concavity formed in the internal face of the plate (53) covering the two covers of the conduits and which comprises a plurality of longitudinal housings (82) in number equal to that of the conducting bars (37) of each ducting element, formed side by side parallel to the bars, with the same between axis spacing as the latter, and separated from each other by insulating walls (83), each of these housings containing a contact clip (84), holding it in position and having in its bottom two notches (87) for respectively freeing the two fitted ends of the clip so that the latter may be applied on two omega shaped fish-plating stirrups (90) disposed facing each other.

4. The device as claimed in claim 3, characterized in that each housing (82) of the case has a depth which permits stacking of several contact clips (84) whose number is determined depending on the intensity of the current to be be transported by the bars.

5. The device as claimed in one of the claims 2 to 4, characterized in that said omega shaped fish-plating stirrups (90) associated respectively with the ends to be connected of the conducting bars of each of the two ducting elements are held in mutual electric insulation relation in the end cut-out (23) in the cover of the corresponding conduit by means of an insulating end piece (93) of a substantially parallelepipedic shape which is embedded transversely to the longitudinal axis of the conduit in the cut-out thereof and which comprises, in its front face, a plurality of sockets (95) in number equal to that of the conducting bars of the corresponding ducting element, formed side by side parallel to the bars with the same between axis spacing as the latter, and separated from each other by dividing walls (97), each of these sockets housing a part only of an omega shaped fish-plating stirrup (90), the remaining part of the stirrup projecting from the associated socket and forming a fitting zone for one of the ends of the corresponding contact clip (84).

6. The device as claimed in claim 5, characterized in that said end piece (93) of each of the two ducting elements comprises parallel channels (116) extending longitudinally and each having two ends, one of which emerges in the rear face of the end piece and the other of which is closed in the front face of the end piece by one of the separating walls (97) of the sockets, these channels each receiving the bared end (115a) of a low current electric conductor (115) extending longitudinally inside the conduit of the corresponding ducting element, in that the upper face of the end piece (93) comprises bores (100) communicating respectively with the channels (116) and each giving access to the bared end (115a) of one of the conductors, and in that the fish-plating block (56) comprises electric connection members (117, 118) adapted for providing electric connection between each bared conductor end of one of the ducting elements and a bared end of the corresponding conductor of the other ducting element by respective engagement in two corresponding bores associated respectively with the two end pieces.

7. The device as claimed in claims 3 and 6, characterized in that each connection member is formed of two conducting clips (117) housed respectively in two insulating supports (102) fast with the case of the fish-plating block (56) and extending in a plane perpendicular to the case in alignment on each side of one of the separating walls, each of the two supports being apertured so as to disclose the blades of the corresponding clip (117), and the two clips being connected electrically together by means of a conducting blade (118) inserted in a longitudinal slit (119) formed in the upper edge of the dividing wall (83).

8. The device as claimed in one of claims 5 to 7, in which the members clamping the two metal plates together are formed by four bolts (105), characterized in that the end piece (93) of each of the two ducting elements has, at the level of its rear face, two lateral sleeves (108) for guiding the bolts, each of the guide sleeves forming a spacer fitted between the bottom of the body of the corresponding conduit and the cover thereof, so as to prevent any deformation of the conduit (12) during bolting.

9. The device as claimed in anyone of the preceding claims, characterized in that the metal plate (52) covering the two bodies of the conduits is formed of a flat rectangular base (58) bordered by two lateral flanges (59) and in which part of each of the two bodies (13) of the conduits is fitted, each conduit body being applied by its bottom (15) against the base (58) of the plate and by its two side walls (16) against the two flanges (59) of the plate, respectively, and in that said plate (52) has foolproof means which allow each of the two bodies of the conduits to be fitted only a single direction.

10. The device as claimed in claim 9, characterized in that said foolproof means comprise a first pair of projections (62, 63) spaced apart respectively on the internal face of the two lateral flanges (59) of the plate (52) and both being situated on a first same side of the plate respectively with respect to the transverse axis (X-X') of the plate passing through the middle thereof and being both offset by different lengths (L-L') with respect to said transverse axis, and a second pair of projections (68, 69) situated on a second same side of the plate opposite the first and positioned symmetrically to the projections of the first pair with respect to the transverse axis of the plate, the two projections of each of the first (62, 63) and second (68, 69) pairs allowing one of the two conduits to be fitted in the plate only when the two projections are engaged respectively in two corresponding notches (65, 66) formed respectively in the two side walls of the body of the corresponding conduit with the same offset, with respect to the end of the conduit, as that of the two projections.

11. The device as claimed in claim 10, characterized in that said first (62, 63) and second (68, 69) pairs of projections of the plate (52) form indexation means for fitting the two conduits (12) inside said plate over equal lengths.

12. The device as claimed in anyone of the preceding claims, characterized in that the internal face of each of the two metal plates (52, 53) has at each of its ends a groove (110) extending transversely over the whole width of the plate and in which a seal (112) is fixedly housed.

FIG.1

# FIG. 2

# FIG. 3

EP 0 335 756 B1

FIG.4

FIG.5

FIG.6

FIG.7

FIG.8

EP 0 335 756 B1